# EUROPEAN PATENT SPECIFICATION

(11) **EP 1 442 972 B1**
(45) Date of publication and mention of the grant of the patent: **10.10.2007**
(21) Application number: 04100248.6
(22) Date of filing: 23.01.2004
(51) Int. Cl.: B62J 35/00, F02M 37/10, B60K 15/077

(54) **Fuel supply unit support structure for vehicles**
Kraftstoffversorgungseinheit für ein Fahrzeug
Unité d'alimentation en carburant pour véhicule

(30) Priority: 31.01.2003 JP 2003023186
(43) Date of publication of application: 04.08.2004
(73) Proprietor: HONDA MOTOR CO., Ltd., Tokyo (JP)
(72) Inventor: HOSOYA, Yukio c/o K.K. Honda Gijutsu Kenkyusho, SAITAMA (JP); SUEDA, Kenichi c/o K.K. Honda Gijutsu Kenkyusho, SAITAMA (JP); HAYAKAWA, Shigeru c/o K.K. Honda Gijutsu Kenkyusho, SAITAMA (JP); MIYAMOTO, Kenichi c/o Keihin Corp. Kakuda, Kakuda, Kakuda-shi, Miyagi (JP); HARAMAI, Akihiko c/o Keihin Corp. Kakuda, Kakuda, Kakuda-shi, Miyagi (JP)
(74) Representative: Poulin, Gérard

(56) References cited:
- EP-A- 0 701 058
- EP-A- 0 728 937
- EP-A- 1 162 132
- US-A- 3 074 347
- US-A- 4 178 955
- US-A- 4 304 530
- US-A- 5 797 376
- PATENT ABSTRACTS OF JAPAN vol. 008, no. 258 (M-340), 27 November 1984 (1984-11-27) & JP 59 131761 A (NISSAN JIDOSHA KK), 28 July 1984 (1984-07-28)

## Description

### Technical Field of the Invention

The present invention relates to an improvement in a fuel supply unit support structure for a vehicle such as a motorcycle of the like, having a fuel supply unit mounted on a ceiling wall of a fuel tank which is supported on a vehicle frame of the vehicle and having a fuel pump assembly immersed in a fuel in the fuel tank.

### Prior Art

A fuel supply unit mounted on a ceiling wall of a fuel tank and having a fuel pump assembly immersed in a fuel in the fuel tank, tends to oscillate back and forth and left and right when vibrated by inertial forces applied at the time the vehicle is accelerated or decelerated or makes a turn, and also by waves of the fuel in the fuel tank that are caused by the inertial forces. In recent years, for making the fuel supply unit resistant to vibrations, it has already been known, as disclosed in the laid-open Japanese patent n°1-159456, to firmly secure a cylindrical auxiliary tank to the fuel tank, accommodate a fuel supply unit in the auxiliary tank, and support the outer circumference of a fuel pump assembly on the inner circumferential surface of the auxiliary tank through a cushion member.

Another fuel supply unit support structure according to the preamble of claim 1 is disclosed in JP 5-9131761.

However, the conventional attempt to secure a special auxiliary tank which supports a fuel pump assembly to a fuel tank for making a fuel supply unit resistant to vibrations is not preferable because an expensive component is added, resulting in an increase in the cost and weight.

### Summary of the Invention

The present invention has been made in view of the above problems. It is an object of the present invention to provide a fuel supply unit support structure for a vehicle, which is simple and effective to increase the vibration resistance of a fuel supply unit without increasing the number of components.

To achieve the above object, there is provided in accordance with a first feature of the present invention a fuel supply unit support structure for a vehicle, having a fuel supply unit mounted on a ceiling wall of a fuel tank and having a fuel pump assembly immersed in a fuel in the fuel tank, characterized in that a damper member made of a resilient material is mounted on the outer circumference of the fuel pump assembly, and the fuel tank has a plurality of support walls integrally formed therewith which are arranged in the circumferential direction of the fuel pump assembly for supporting the circumference of the fuel pump assembly through the damper member.

According to the first feature, since the plural support walls which support the circumference of the fuel pump assembly through the damper member is integrally formed with the fuel tank, the fuel supply unit is made resistant to vibrations without any special support member. Therefore, a vibration-resistant structure of the fuel supply unit can be provided inexpensively without involving an increase in the weight.

According to a second feature of the present invention, in addition to the first feature, the damper member is of an annular shape fitted over the outer circumferential surface of the fuel pump assembly, and has a number of damper fins integrally projecting from an outer circumferential surface thereof and held in contact with or close to the support walls.

According to the second feature, the damper member is given a good damping function by the damper fins for contributing to an increase in the vibration resistance of the fuel supply unit, and even if the damper member is swollen in the fuel, the damper fins are deformed to prevent the fuel pump assembly from developing excessive stresses.

According to a third feature of the present invention, in addition to the second feature, plural ones of the number of damper fins have distal ends integrally joined by joint ribs, and the plural damper fins have sides held in contact with or close to an end of one of the support walls.

According to the third feature, since the damper fins joined by the joint ribs appropriately increase the flexural rigidity of each other, the damper fins as they are held in contact with the end of one of the support walls dampen oscillations of the fuel pump assembly effectively upon their suitable flexing.

According to a fourth feature of the present invention, in addition to the second or third feature, the damper member has a positioning protrusion integrally formed with an inner circumferential surface thereof and engaging in a positioning hole defined in the outer circumferential surface of the fuel pump assembly.

According to the fourth feature, when the damper member is fitted over the outer circumferential surface of the fuel pump assembly, the positioning protrusion integrally formed with the inner circumferential surface thereof engages in the positioning hole defined in the outer circumferential surface of the fuel pump assembly, holding the damper member in position around the fuel pump assembly. Therefore, the damper fins can be held in normal positions corresponding to the support walls, allowing the damper member to perform its damping function properly.

According to a fifth feature of the present invention, in addition to any one of the second through fourth features, the outer circumferential surface of the fuel pump assembly has an upper pressing protrusion and a lower pressing protrusion for vertically sandwiching the damper member therebetween.

According to the fifth feature, no special attachment member is required to mount the damper member on the fuel pump assembly, and hence the mount structure for the damper member is simplified.

### Brief Description of the Drawings

The present invention will be described below based on a preferred embodiment thereof which is shown by the accompanying drawings.
- FIG. 1 is a side elevational view of a motorcycle to which the present invention is applied.
- FIG. 2 is a side elevational view of a fuel tank shown in FIG. 1.
- FIG. 3 is a plan view of the fuel tank.
- FIG. 4 is an enlarged vertical cross-sectional view of a fuel supply unit shown in FIG. 2.
- FIG. 5 is a cross-sectional view taken along line 5 - 5 of FIG. 4.
- FIG. 6 is a cross-sectional view taken along line 6 - 6 of FIG. 4.
- FIG. 7 is a perspective view of a damper member.

### Detailed Description of a Preferred Embodiment of the Invention

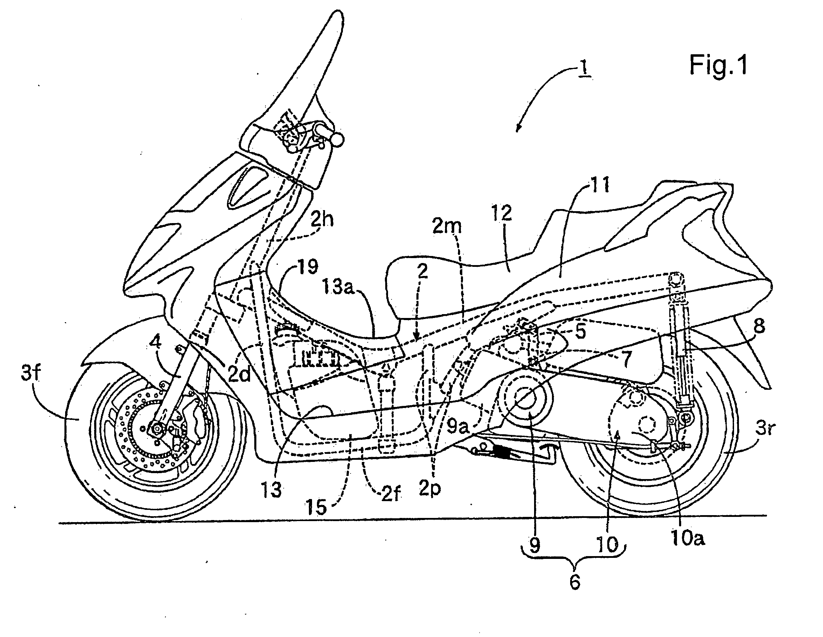

As shown in FIG. 1, a scooter-type motorcycle 1 as a vehicle has a vehicle frame 2 including a head pipe 2h, a main pipe 2m extending from the lower end of the head pipe 2h to a position near the rear end of the vehicle and has a rear portion bifurcated, a pair of left and right down tubes 2d extending downwardly from a rear surface of the head pipe 2h above the main pipe 2m at a sharp angle, floor supports 2f extending horizontally rearwardly from the lower ends of the respective down tubes 2d, and a center pillar 2p rising from the rear ends of the floor supports 2f and joined to the bifurcated portion of the main pipe 2m. A front fork 4 on which a front wheel 3f is supported by a shaft has a steering stem steerably supported by the head pipe 2h. A suspension link 5 is resiliently supported on an intermediate portion of the main pipe 2m, and a power unit 6 is vertically swingably suspended from the suspension link 5 by a pivot shaft 7. A rear cushion 8 is connected between the power unit 6 and the rear ends of the main pipe 2m.

The power unit 6 includes an engine 9 having a cylinder block 9a tilted forward closely in a horizontal orientation, and a continuously variable transmission 10 having a transmission case 10a extending rearward and integrally joined to a side of the engine 9. A rear wheel 3r which is driven by the output of the continuously variable transmission 10 is supported by a shaft on the rear end of the transmission case 10a.

A luggage box 11 for holding a large-size object such as a helmet or the like therein is mounted on the rear portion of the main pipe 2m. A rider's seat 12, which doubles as a lid of the luggage box 11, is mounted on an upper portion of the luggage box 11.

A step floor 13 mounted on the floor supports 2f has a tunnel-shaped upwardly raised portion 13a disposed laterally centrally thereon over the main pipe 2m. A fuel tank 15 is accommodated in the upwardly raised portion 13a.

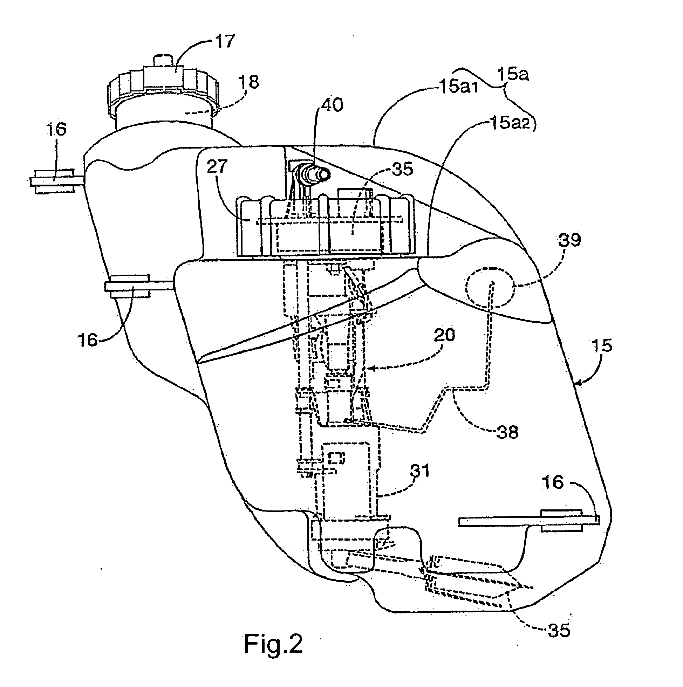

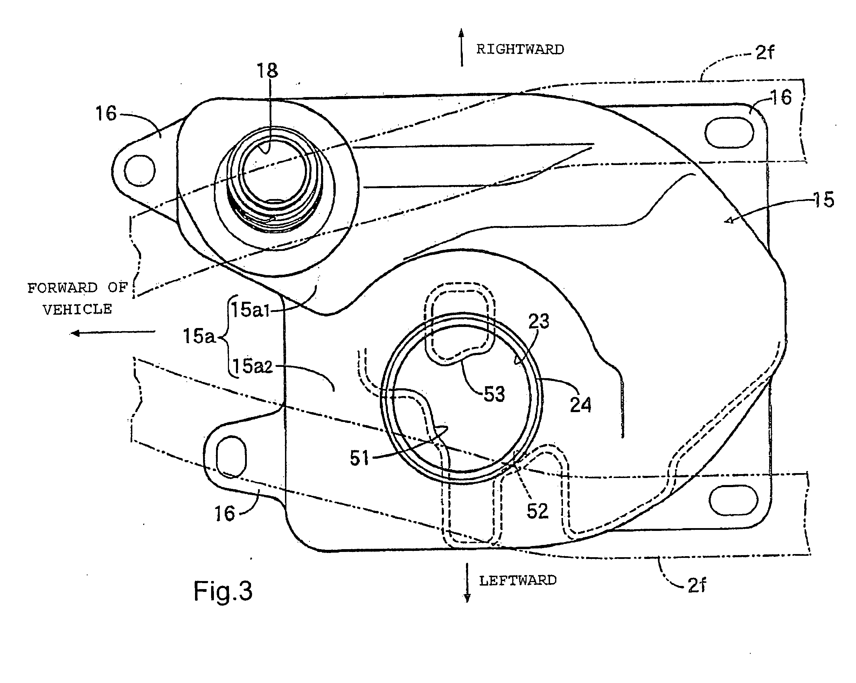

The fuel tank 15 is made of synthetic resin. As shown in FIGS. 2 and 3, the fuel tank 15 has a plurality of ears 16 integrally projecting on its circumference. The ears 16 are supported by the left and right down tubes 2d and the floor supports 2f.

The fuel tank 15 has a ceiling wall 15a including a lower step 15a₂ positioned below the main pipe 2m and an upper step 15a₁ raised from the lower step 15a₂ and positioned on left and right sides of the main pipe 2m. The upper step 15a₁ has a fuel inlet 18 disposed out of interference with the main pipe 2m and closed by a tank tap 17. A fuel lid 19 (see FIG. 1), which is to be opened and closed when the tank cap 17 is mounted and removed, is pivotally supported on the upwardly raised portion 13a.

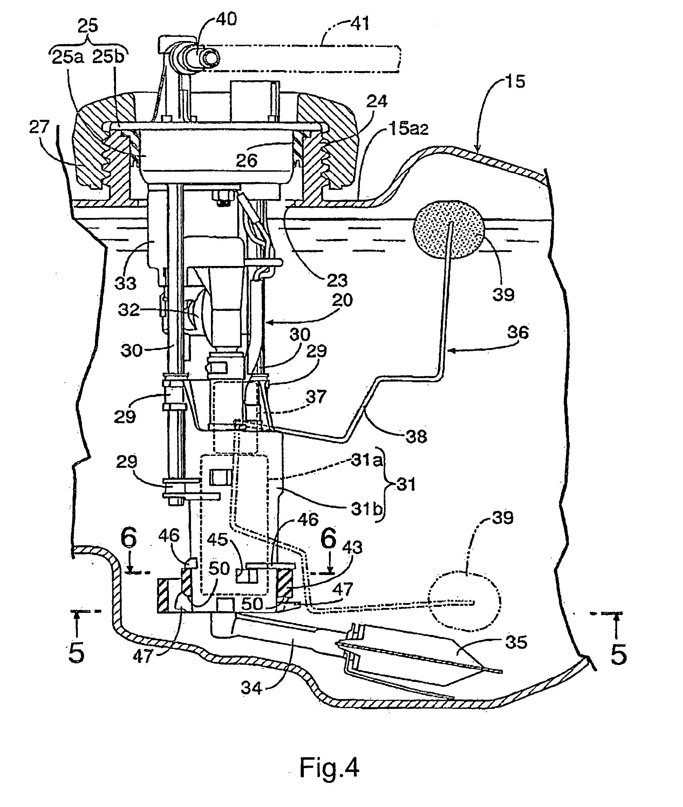

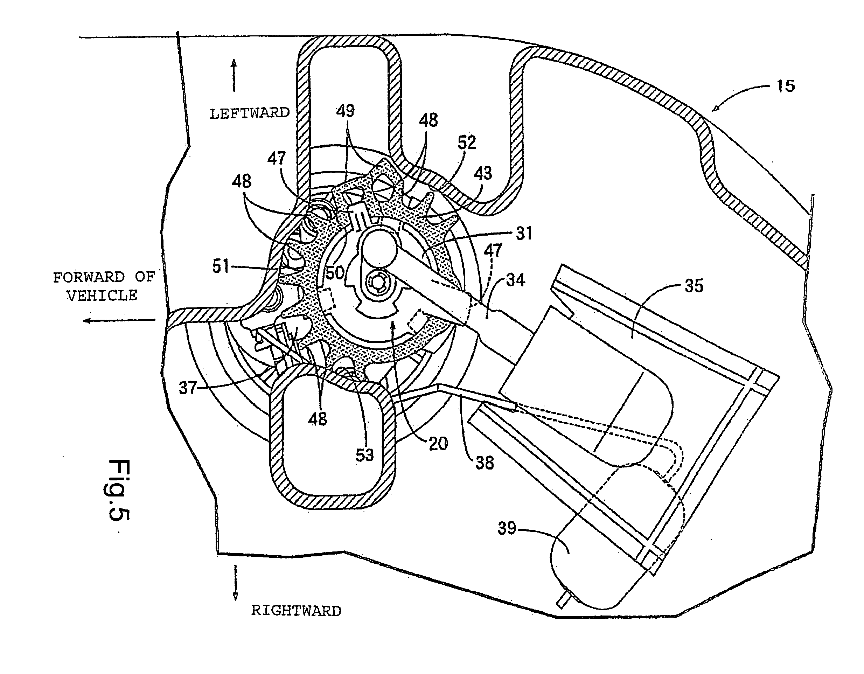

A fuel supply unit 20 for supplying fuel to the engine 9 is mounted on the lower step 15a₂ of the ceiling wall 15a. The fuel supply unit 20 will be described in detail below with reference to FIGS. 4 and 5.

The lower step 15a₂ of the ceiling wall 15a of the fuel tank 15 has an opening 23 and a threaded tube 24 disposed around the opening 23 and projecting upwardly. The fuel supply unit 20 is inserted into the fuel tank 15 through the opening 23 and the threaded tube 24. The fuel supply unit 20 has a mounting base 25 on its upper end which has a cylinder 25a fitted in the threaded tube 24 with a seal member 26 interposed therebetween. The mounting base 25 also has a flange 25b contiguous to the upper end of the cylinder 25a and sandwiched between the upper end of the threaded tube 24 and a mounting ring 27 threaded over the threaded tube 24. In this manner, the fuel supply unit 20 is mounted on the lower step 15a₂ of the ceiling wall 15a of the fuel tank 15.

The fuel supply unit 20 has a plurality of (two in the illustrated embodiment) support rods 30 projecting from the lower surface of the mounting base 25. On the support rods 30, there are mounted, successively from the lower ends, a vertically long, cylindrical fuel pump assembly 31 immersed in the fuel, a pressure regulator 32 for adjusting the discharged pressure of the fuel pump assembly 31 to a constant level, and a fuel filter 33 for filtering the fuel discharged from the fuel pump assembly 31.

The fuel pump assembly 31 includes a motor-operated fuel pump 31a and a cylindrical pump holder 31b of synthetic resin which holds the fuel pump 31a therein. The pump holder 31b has a plurality of mounting bosses 29 integrally formed with its outer circumference which are supported on the support rods 30.

A fuel strainer 35 is connected to an inlet port that is open in the lower end surface of the fuel pump assembly 31, by an inlet tube 34 extending obliquely rearward from the fuel pump assembly 31. A remaining fuel amount sensor 36 is mounted on a side of the fuel pump assembly 31. The remaining fuel amount sensor 36 includes a sensor housing 37 mounted on a side wall of the fuel pump assembly 31, a float support arm 38 swingably supported on the sensor housing 37 and extending in the same direction as the fuel strainer 35, a float 39 attached to the distal end of the float support arm 38, and a potentiometer (not shown) disposed in the sensor housing 37 for converting an angular displacement of the float support arm 38 into an electric quantity representative of the remaining amount of a fuel in the fuel tank 15.

A fuel outlet tube 40 projects on the upper surface of the mounting base 25 for discharging the fuel in the fuel tank 15 that is drawn upwardly by the fuel pump assembly 31. A fuel supply tube 41 leading to a fuel injection valve (not shown) of the engine 9 is connected to the fuel outlet tube 40.

The fuel pump assembly 31 has a lower end disposed closely to the bottom of the fuel tank 15. A damper member 43 made of a resilient material such as rubber, synthetic resin, spring, or the like is mounted on the outer circumference of the lower end of the fuel pump assembly 31.

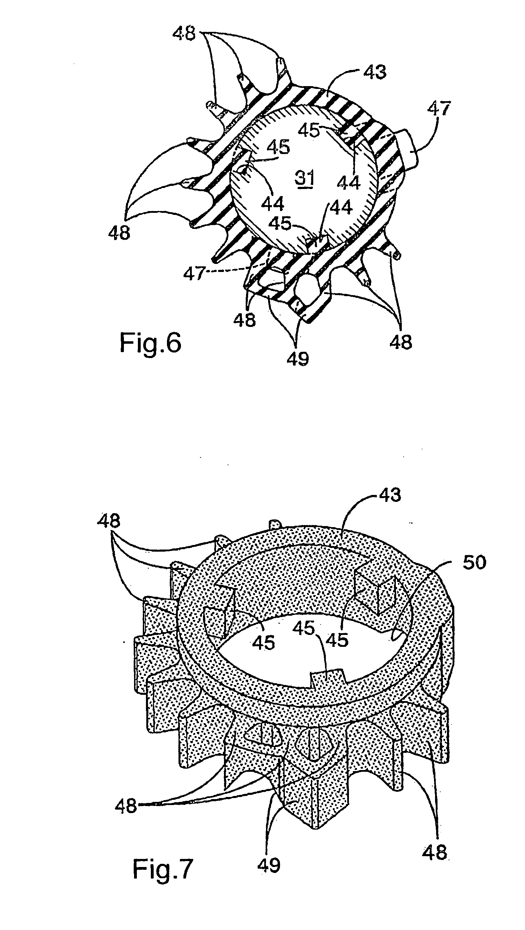

As shown in FIGS. 5 through 7, the damper member 43 is of a ring shape matching the outer circumferential surface of the cylindrical fuel pump assembly 31. The damper member 43 has a plurality of positioning protrusions 45 integrally formed with its inner circumferential surface for being fitted in a plurality of positioning holes 44 defined in the outer circumferential surface of the lower end of the fuel pump assembly 31. The outer circumferential surface of the lower end of the fuel pump assembly 31 has a plurality of upper pressing protrusions 46 and a plurality of lower pressing protrusions 47 for vertically sandwiching the damper member 43. The lower pressing protrusions 47 have respective recesses 50 in their portions that engage the lower end surface of the damper member 43.

The damper member 43 is stretched radially and fitted between the upper pressing protrusions 46 and the lower pressing protrusions 47 on the outer circumferential surface of the fuel pump assembly 31. Then, the positioning protrusions 45 engage in the positioning holes 44, thus mounting the damper member 43 in position on the outer circumferential surface of the lower end of the fuel pump assembly 31.

A number of circumferentially arranged damper fins 48 are integrally formed with the outer circumferential surface of the damper member 43, except a certain region thereof near the fuel strainer 35 and the float support arm 38. Some of the damper fins 48 have distal ends integrally joined by joint ribs 49.

A plurality of support walls 51 through 53 for being held in contact with or close to the tip ends of the damper fins 48 are integrally formed with the bottom of the fuel tank 15 in surrounding relation to the damper member 43. In the illustrated embodiment, the support walls include a first support wall 51 disposed slightly obliquely forward of the damper member 43 in contact with or close to a plurality of damper fins 48, a second support wall 52 disposed on one side and slightly obliquely rearward of the damper member 43 in contact with or close to a plurality of damper fins 48, and a third support wall 53 disposed on a side of the damper member 43 opposite to the second support wall 52 in contact with or close to a plurality of damper fins 48. The second support wall 52 in particular has its front side end held in contact with or close to a side of the damper fins 48 that are joined by the joint ribs 49.

The first and second support walls 51, 52 are formed by pressing circumferential wall portions of the bottom of the fuel tank 15 into the fuel tank 15, and the third support wall 53 is formed by raising a portion of the bottom wall of the fuel tank 15 into the fuel tank 15.

Operation of the present embodiment will be described below.

While the engine 9 is in operation, the fuel pump assembly 31 operates to draw in the fuel in the fuel tank 15 through the fuel strainer 35 and the inlet tube 34, and deliver the fuel under pressure through the fuel filter 33 to the fuel outlet tube 40. The fuel is supplied through the fuel supply tube 41 to the fuel injection valve of the engine 9. If the discharged pressure of the fuel pump assembly 31 exceeds a prescribed value during this time, the pressure regulator 32 operates to discharge the excessive pressure into the fuel tank 15.

The mounting base 25 on the upper end of the fuel supply unit 20 is attached to the ceiling wall 15a of the fuel tank 15, and the fuel pump assembly 31 in the lower portion of the fuel supply unit 20 is disposed in the fuel tank 15 close to the bottom of the fuel tank 15. Therefore, the fuel supply unit 20 is vertically elongate. However, since the outer circumference of the lower end of the fuel pump assembly 31 is resiliently supported by the support walls 51 through 53 integral with the fuel tank 15 through the damper member 43, even when the fuel supply unit 20 is oscillated by inertial forces applied at the time the motorcycle 1 is accelerated or decelerated or makes a turn, and also by waves of the fuel in the fuel tank 15 that are caused by the inertial forces, vibrations of the lower end of the fuel supply unit 20 are absorbed by the resiliency of the damper member 43 and their amplitude is minimized thereby to make the fuel supply unit 20 highly resistant to vibrations.

Particularly, when the lower end of the fuel supply unit 20, i.e., the fuel pump assembly 31, is displaced forward, the damper fins 48 of the damper member 43 abut against the first support wall 51 and are resiliently deformed. Consequently, forward displacements of the fuel pump assembly 31 are dampened. When the fuel pump assembly 31 is displaced to the left, the damper fins 48 of the damper member 43 abut against the first and second support walls 51, 52 and are resiliently deformed. Consequently, leftward displacements of the fuel pump assembly 31 are dampened. When the fuel pump assembly 31 is displaced to the right, the damper fins 48 of the damper member 43 abut against the third support wall 53 and are resiliently deformed. Consequently, rightward displacements of the fuel pump assembly 31 are dampened. When the fuel pump assembly 31 is displaced rearward, the damper fins 48 that are joined by the joint ribs 49 to increase the flexural rigidity of each other abut against the front end of the second support wall 52 and are flexed altogether. Consequently, rearward displacements of the fuel pump assembly 31 are dampened effectively.

Thus, as the three support walls 51 through 53 spaced in the circumferential direction of the fuel pump assembly 31 are capable of effectively suppressing forward, rearward, leftward, and rightward vibrations of the fuel supply unit 20, the fuel strainer 35 and the remaining fuel amount sensor 36 can be disposed between the second and third support walls 52, 53, and the fuel can flow between the support walls 51, 52, 53. Since the first through third support walls 51 through 53 are constructed of portions of the circumferential and bottom walls of the fuel tank 15, no special support members are required. Thus, the vibration resistance of the fuel supply unit 20 can be increased without involving an increase in the weight, contributing to making its vibration-resistant structure simpler and cheaper.

Even if the damper member 43 is swollen in the fuel, the damper fins 48 held in contact with the first through third support walls 51 through 53 are easily resiliently deformed to prevent excessive stresses from being developed in the fuel pump assembly 31.

The annular damper member 43 is mounted on the fuel pump assembly 31 by being fitted over the outer circumferential surface of the fuel pump assembly 31, and vertically sandwiched by the upper and lower pressing protrusions 46, 47 which project on the outer circumferential surface of the fuel pump assembly 31. Therefore, no special mounting members are required, and the mounting structure for the damper member 43 is highly simple. In addition, when the damper member 43 is fitted over the outer circumferential surface of the fuel pump assembly 31, the positioning protrusions 45 on the inner circumferential surface of the damper member 43 engage in the positioning holes 44 in the outer circumferential surface of the fuel pump assembly 31, thus holding the damper member 43 in position around the fuel pump assembly 31. Thus, the damper fins 48 can be held in normal positions corresponding to the first through third support walls 51 through 53, allowing the damper member 43 to perform its damping function properly in coaction with the first through third support walls 51 through 53.

While the preferred embodiment of the present invention has been described above, the present invention is not limited to the above embodiment, but various design changes may be made without departing from the scope of the invention. For example, the number of support walls 51 through 53 may be two or four or more. The fuel pump 31a may be mounted directly on the support rods 30 without the pump holder 31b, and the damper member 43 may be mounted directly on the fuel pump 31a.

### Effects of the Invention

According to a first feature of the present invention, as described above, a fuel supply unit support structure for a vehicle, having a fuel supply unit mounted on a ceiling wall of a fuel tank and having a fuel pump assembly immersed in a fuel in the fuel tank, is characterized in that a damper member made of a resilient material is mounted on the outer circumference of the fuel pump assembly, and the fuel tank has a plurality of support walls integrally formed therewith which are arranged in the circumferential direction of the fuel pump assembly for supporting the circumference of the fuel pump assembly through the damper member. Therefore, the fuel supply unit is made resistant to vibrations without any special support member and hence without involving an increase in the weight. Thus, a vibration-resistant structure of the fuel supply unit can be provided inexpensively.

According to a second feature of the present invention, in addition to the first feature, the damper member is of an annular shape fitted over the outer circumferential surface of the fuel pump assembly, and has a number of damper fins integrally projecting from an outer circumferential surface thereof and held in contact with or close to the support walls. Therefore, the damper member is given a good damping function by the damper fins for contributing to an increase in the vibration resistance of the fuel supply unit, and even if the damper member is swollen in the fuel, the damper fins are deformed to prevent the fuel pump assembly from developing excessive stresses.

According to a third feature of the present invention, in addition to the second feature, plural ones of the number of damper fins have distal ends integrally joined by joint ribs, and the plural damper fins have sides held in contact with or close to an end of one of the support walls. Therefore, the damper fins joined by the joint ribs appropriately increase the flexural rigidity of each other, and the damper fins dampen oscillations of the fuel pump assembly effectively upon their suitable flexing.

According to a fourth feature of the present invention, in addition to the second or third feature, the damper member has a positioning protrusion integrally formed with an inner circumferential surface thereof and engaging in a positioning hole defined in the outer circumferential surface of the fuel pump assembly. Therefore, when the damper member is fitted over the fuel pump assembly, the positioning protrusion integrally formed with the inner circumferential surface thereof engages in the positioning hole defined in the outer circumferential surface of the fuel pump assembly, holding the damper member in position around the fuel pump assembly. Therefore, the damper fins can be held in normal positions corresponding to the support walls, allowing the damper member to perform its damping function properly.

According to a fifth feature of the present invention, in addition to any one of the second through fourth features, the outer circumferential surface of the fuel pump assembly has an upper pressing protrusion and a lower pressing protrusion for vertically sandwiching the damper member therebetween. Therefore, no special attachment member is required to mount the damper member on the fuel pump assembly, and hence the mount structure for the damper member is simplified.

## Claims

1. Fuel supply unit support structure for a vehicle, having a fuel supply unit (20), the upper end of which is mounted on a ceiling wall (15a) of a fuel tank (15) and which has, in the lower portion, a fuel pump assembly (31) immersed in a fuel in the fuel tank (15), a damper member (43) made of a resilient material being mounted on the outer circumference of said fuel pump assembly (31), **characterized in that**
the fuel tank (15) has a plurality of support walls (51-53) which are integrally formed with the bottom of the fuel tank (15) and arranged in the circumferential direction of said fuel pump assembly (31) for supporting the circumference of the fuel pump assembly (31) through the damper member (43).

2. Fuel supply unit support structure for a vehicle according to claim 1, wherein said damper member (43) is of an annular shape fitted over the outer circumferential surface of said fuel pump assembly (31), and has a number of damper fins (48) integrally projecting from an outer circumferential surface thereof and held in contact with or close to said support walls (51-53).

3. Fuel supply unit support structure for a vehicle according to claim 2, wherein plural ones of said number of damper fins (48) have distal ends integrally joined by joint ribs (49), and the plural damper fins (48) have sides held in contact with or close to an end of one of the support walls (52).

4. Fuel supply unit support structure for a vehicle according to claim 2 or 3, wherein said damper member (43) has a positioning protrusion (45) integrally formed with an inner circumferential surface thereof and engaging in a positioning hole (44) defined in the outer circumferential surface of said fuel pump assembly (31).

5. Fuel supply unit support structure for a vehicle according to any one of claims 2 through 4, wherein the outer circumferential surface of said fuel pump assembly (31) has an upper pressing protrusion (46) and a lower pressing protrusion (47) for vertically sandwiching said damper member (43) therebetween.

## Patentansprüche

1. Kraftstoffversorgungseinheit-Tragstruktur für ein Fahrzeug, umfassend eine Kraftstoffversorgungseinheit (20), deren oberes Ende an einer Deckenwand (15a) eines Kraftstofftanks (15) montiert ist, und die im unteren Bereich eine Kraftstoffpumpenanordnung (31) aufweist, die in einen Kraftstoff in dem Kraftstofftank (15) eingetaucht ist, wobei ein Dämpfungselement (43), das aus einem federnden Material hergestellt ist, am Außenumfang der Kraftstoffpumpenanordnung (31) montiert ist, **dadurch gekennzeichnet, dass**
der Kraftstofftank (15) eine Mehrzahl von Tragwänden (51-53) aufweist, die integral mit dem Boden des Kraftstofftanks (15) gebildet und in der Umfangsrichtung der Kraftstoffpumpenanordnung (31) angeordnet sind, um den Umfang der Kraftstoffpumpenanordnung (31) durch das Dämpfungselement (43) zu tragen.

2. Kraftstoffversorgungseinheit-Tragstruktur für ein Fahrzeug nach Anspruch 1, wobei das Dämpfungselement (43) eine Ringgestalt aufweist, die über die Außenumfangsfläche der Kraftstoffpumpenanordnung (31) gepaßt ist, und eine Mehrzahl von Dämpfungsflossen (48) aufweist, die integral von einer Außenumfangsfläche derselben vorstehen und in Kontakt mit oder nahe den Tragwänden (51-53) gehalten werden.

3. Kraftstoffversorgungseinheit-Tragstruktur für ein Fahrzeug nach Anspruch 2, wobei mehrere der Mehrzahl von Dämpfungsflossen (48) distale Enden aufweisen, die integral durch Verbindungsrippen (49) verbunden sind, und wobei die mehreren Dämpfungsflossen (48) Seiten aufweisen, die in Kontakt mit oder nahe einem Ende von einer der Tragwände (52) gehalten werden.

4. Kraftstoffversorgungseinheit-Tragstruktur für ein Fahrzeug nach Anspruch 2 oder 3, wobei das Dämpfungselement (43) einen Positioniervorsprung (45) aufweist, der integral mit einer Innenumfangsfläche desselben gebildet ist und in Eingriff in einem Positionierloch (44) ist, welches in der Außenumfangsfläche der Kraftstoffpumpenanordnung (31) definiert ist.

5. Kraftstoffversorgungseinheit-Tragstruktur für ein Fahrzeug nach einem der Ansprüche 2 bis 4, wobei die Außenumfangsfläche der Kraftstoffpumpenanordnung (31) einen oberen Drückvorsprung (46) und einen unteren Drückvorsprung (47) aufweist, um das Dämpfungselement (43) vertikal sandwichförmig dazwischen einzuschließen.

## Revendications

1. Structure de support d'un dispositif d'alimentation en carburant d'un véhicule, comprenant un dispositif d'alimentation en carburant (20), dont l'extrémité supérieure est montée sur une paroi supérieure (15a) d'un réservoir de carburant (15) et qui dispose, dans sa partie inférieure, d'un ensemble de pompe à carburant (31) immergé dans le carburant du réservoir de carburant (15), un élément amortisseur (43) fait d'un matériau résilient et monté en périphérie extérieure dudit ensemble de pompe à carburant (31), **caractérisée en ce que**:
le réservoir de carburant (15) a une pluralité de parois de support (51 - 53) qui font partie intégrante du bas du réservoir de carburant (15) et sont disposées dans la direction périphérique dudit ensemble de pompe à carburant (31) pour supporter la circonférence de l'ensemble de pompe à carburant (31) par l'intermédiaire de l'élément amortisseur (43).

2. Structure de support d'un dispositif d'alimentation en carburant d'un véhicule selon la revendication 1, dans laquelle ledit élément amortisseur (43) est de forme annulaire, monté sur la surface périphérique externe dudit ensemble de pompe à carburant (31), et possède un certain nombre d'ailettes d'amortissement (48) faisant saillie intégrale de sa surface périphérique externe et qui sont maintenues contre ou à proximité desdites parois de support (51 - 53).

3. Structure de support d'un dispositif d'alimentation en carburant d'un véhicule selon la revendication 2, dans laquelle plusieurs desdites ailettes d'amortissement (48) possèdent des extrémités distales intégralement reliées par des nervures de raccordement (49), et les multiples ailettes d'amortissement (48) ont des côtés qui sont maintenus contre ou à proximité d'une extrémité d'une des parois de support (52).

4. Structure de support d'un dispositif d'alimentation en carburant d'un véhicule selon la revendication 2 ou 3, dans laquelle l'élément amortisseur (43) possède une protubérance (45) permettant son positionnement, intégralement formée avec sa surface périphérique interne, et apte à s'engager dans un trou de positionnement (44) formé dans la surface périphérique externe dudit ensemble de pompe à carburant (31).

5. Structure de support d'un dispositif d'alimentation en carburant d'un véhicule selon l'une quelconque des revendications 2 à 4, dans laquelle la surface périphérique externe dudit ensemble de pompe à carburant (31) possède une protubérance supérieure (46) et une protubérance inférieure (47) qui serrent pour maintenir verticalement ledit élément amortisseur (43) en sandwich.
